(19) Europäisches Patentamt
European Patent Office
Office européen des brevets

(11) **EP 4 579 529 A1**

(12) **EUROPEAN PATENT APPLICATION**

(43) Date of publication:
**02.07.2025 Bulletin 2025/27**

(21) Application number: **24208687.4**

(22) Date of filing: **24.10.2024**

(51) International Patent Classification (IPC):
***G06N 3/049*** *(2023.01)*     ***G06N 3/063*** *(2023.01)*

(52) Cooperative Patent Classification (CPC):
**G06N 3/063; G06N 3/049;** G06N 3/044;
G06N 3/0464; G06N 3/047

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.12.2023 KR 20230194423**

(71) Applicant: **Samsung Electronics Co., Ltd.
Suwon-si, Gyeonggi-do 16677 (KR)**

(72) Inventors:
• **Kwon, Soon-Wan
16678 Suwon-si, Gyeonggi-do (KR)**
• **Yun, Seok Ju
16678 Suwon-si, Gyeonggi-do (KR)**
• **Lee, Jaehyuk
16678 Suwon-si, Gyeonggi-do (KR)**

(74) Representative: **Grünecker Patent- und
Rechtsanwälte
PartG mbB
Leopoldstraße 4
80802 München (DE)**

(54) **IN-MEMORY COMPUTING MACRO AND METHOD OF OPERATION**

(57)     An in-memory computing (IMC) macro has a mode alternating between a first mode and a second mode, and the IMC macro includes: an input control circuit configured to be capable of generating a signal in which a predefined pattern is applied to an input signal and of transmitting a previous operation result that is fed back, and which is performed depends on which mode the operating mode is in; a crossbar array including memory cells including an additional row that processes and stores the fed-back previous operation result, and columns including an adder tree corresponding to the memory cells; and a post arithmetic circuit configured to be capable of performing a first operation corresponding to a spiking neural network (SNN) and a second operation corresponding to an artificial neural network (ANN), wherein which of the first and second operations is performed depends on which mode is in effect.

FIG. 3

## Description

BACKGROUND

1. Field

The following description relates to an in-memory computing (IMC) macro and a method of operating the IMC macro.

2. Description of Related Art

Various types of neural networks trained with machine learning and/or deep learning may be used to provide high performance in terms of, for example, accuracy, speed, and/or energy efficiency, in many application fields. Algorithms that enable machine learning of the neural networks may require an high computational amounts but the operations for their computation may be relatively simple operations, such as, a multiply-accumulate (MAC) operation that calculates a dot product of two vectors and accumulates their result values. Such uncomplicated operations as the MAC operation may be implemented through in-memory computing (IMC).

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In one general aspect, an in-memory computing (IMC) macro has an operating mode that can alternate between a first mode and a second mode, and the IMC macro includes: an input control circuit configured to be capable of generating a signal in which a predefined pattern is applied to an input signal and of transmitting a previous operation result that is fed back, and which is performed depends on which mode the operating mode is in; a crossbar array including memory cells including an additional row that processes and stores the fed-back previous operation result, and columns including an adder tree corresponding to the memory cells; and a post arithmetic circuit configured to be capable of performing a first operation corresponding to a spiking neural network (SNN) and a second operation corresponding to an artificial neural network (ANN), wherein which of the first and second operations is performed depends on which mode the operating mode is in.

The memory cells may include rows that store weights corresponding to the input signal, and wherein the adder tree is configured to add a first operation result between the input signal and the weights and a second operation result between the predefined pattern and the previous operation result.

The input signal may include: a spiking signal for the SNN or a feature map for the NN.

The IMC macro may be being configured to: set the operating mode to the first mode for the SNN or the second mode for the NN, depending on a command transmitted from a host.

The first mode may be for the SNN and the second mode may be for the NN, and the input control circuit may be further configured to: based on the operating mode being in the first mode, set the predefined pattern to 1; and based on the operating mode being in the second mode, set the predefined pattern to a pattern, the pattern corresponding to a number of bits of the input signal.

The previous operation result may include a previous membrane-potential value of the SNN, and the input control circuit may include an additional input port configured to, depending on which mode the operating mode is in, transmit a processed value of the previous membrane-potential value or transmit a bias value for each of the plurality of columns to the additional row of each of the memory cells.

The first mode may be for the SNN, the processed value of the previous membrane-potential value may be an arithmetic-negation of the previous membrane-potential value fed back from the post arithmetic circuit, and the additional input port may be configured to: based on the operating mode being in the first mode, transmit the processed value to the additional row of each of the memory cells.

The second mode may be for the NN, and the additional input port may be configured to: based on the operating mode being in the second mode, transmit the bias value for each of the columns to the additional row of each of the memory cells.

The additional row may be configured to: based on the operating mode being in the first mode, store the processed previous membrane-potential value; and based on the operating mode being in the second mode, store the bias value for each of the plurality of columns.

The crossbar array may be configured to: store a result of adding, by the adder tree, (i) a first multiply operation result obtained by adding individual products between weights stored in the memory cells and the input signal and (ii) a second multiply operation result obtained by multiplying the predefined pattern and a value stored in the additional row.

The post arithmetic circuit may include: a first shifter configured to adjust an operation result of the adder tree by a right shift operation, based on the operating mode being a first mode; a second shifter configured to adjust a value stored in an accumulator by a left shift operation, based on the operating mode being a second mode; and the accumulator.

The post arithmetic circuit may be configured to,

based on the operating mode being in the first mode: by the first shifter, perform the right shift operation on an operation result between a spiking signal and a weight, which is added by the adder tree; by the second shifter, pass-through a membrane-potential value stored in the additional row; and store, in the accumulator, a result of the right shift operation and the passed-through membrane-potential value.

The post arithmetic circuit may be configured to, based on the operating mode being the second mode: by the first shifter, pass-through, into the accumulator, a result of adding (i) a first multiply operation between a weight stored in the memory cells and the input signal and (ii) a second multiply operation between a bias value for each of the columns stored in the additional row and a value of the predefined pattern; by the second shifter, perform the left shift operation on an operation result of the accumulator corresponding to the input signal that is applied bit-serially; and by the accumulator, accumulate a result of the left shift operation to generate a multi-bit.

The adder tree may be configured to, at each operation, for each of the plurality of columns: simultaneously perform (i) a first multiply operation between the input signal and weights stored in the memory cells and (ii) a second multiply operation between the weights and the previous operation result.

The IMC macro may be integrated in at least one device among: a mobile device, a mobile computing device, a mobile phone, a smartphone, a personal digital assistant (PDA), a fixed location terminal, a tablet computer, a computer, a wearable device, a laptop computer, a server, a music player, a video player, an entertainment unit, a navigation device, a communication device, a global positioning system (GPS) device, a television (TV), a tuner, a satellite radio, a song player, a digital video player, a digital video disc (DVD) player, a vehicle, a component of the vehicle, an avionics system, a drone, a multicopter, and a medical device.

In another general aspect, there is a method of operating an in-memory computing (IMC) macro having an operating mode that can alternate between a first mode and a second mode, and the method includes: depending on which mode the operating mode is in, transmitting a result of applying a predefined pattern to an input signal or a previous membrane-potential value that is fed back; storing weights corresponding to the input signal in rows of memory cells, and processing and storing the fed-back previous membrane-potential value in an additional row of the memory cells; adding, by an adder tree, (i) a first operation result between the input signal and the weights and (ii) a second operation result between the predefined pattern and the fed-back previous membrane-potential value; and selectively performing a first operation corresponding to a spiking neural network (SNN) or a second operation corresponding to an artificial neural network (ANN), wherein which of the operations is performed depends on which mode the operating mode is in.

The transmitting may include: depending on which mode the operating mode is in, transmitting a processed value of the previous membrane-potential value or a bias value for each of the plurality of columns to the additional row of each of the memory cells.

The first mode may be for the SNN and the second mode may be for the NN, and the transmitting to the additional row may include: based on the operating mode being in the first mode, updating the additional row by transmitting, to the additional row of each of the memory cells, the processed value, wherein the processed value is obtained by arithmetic-negation of the previous membrane-potential value; and based on the operating mode being in the second mode, updating the additional row by transmitting the bias value for each of the plurality of columns of the memory cells to the additional row of each of the memory cells.

The first mode may be for the SNN, and the selectively performing may include: based on the operating mode being in the first mode, by a first shifter, performing a right shift operation on an operation result between a spiking signal and the weights, which is added by the adder tree; by a second shifter, passing-through a membrane-potential value stored in the additional row; and storing a result of the right shift operation and the passed-through membrane-potential value in an accumulator.

The second mode may be for the NN, and the selectively performing may include: based on the operating mode being in the second mode: by a first shifter, passing-through, into an accumulator, a result of adding (i) a first multiply operation between the weights stored in the memory cells and the input signal and (ii) a second multiply operation between a bias value for each of the plurality of columns stored in the additional row and a value of the predefined pattern; by a second shifter, performing a left shift operation on an operation result of the accumulator corresponding to the input signal that is applied bit-serially; and by the accumulator, accumulating a result of the left shift operation to generate a multi-bit.

The NN may be the artificial neural network, ANN, while the SNN is the spiking neural network.

Other features and aspects will be apparent from the following detailed description, the drawings, and the claims.

BRIEF DESCRIPTION OF THE DRAWINGS

FIG. 1A illustrates an example implementation of an in-memory computing (IMC) system that performs a multiply-accumulate (MAC) operation of a neural network, according to one or more example embodiments.

FIG. 1B illustrates an example structure of a neural network, according to one or more example embodiments.

FIG. 1C illustrates example operations of a spiking neural network (SNN) and an artificial neural network (ANN), according to one or more example embodiments.

FIG. 2 illustrates an example IMC macro, according to one or more example embodiments.

FIG. 3 illustrates an example structure and operation of an IMC macro, according to one or more example embodiments.

FIGS. 4A and 4B illustrate example operations of a post arithmetic circuit where the operations depend on an operating mode, according to one or more example embodiments.

FIG. 5 illustrates an example flow of operations of an IMC macro, according to one or more example embodiments.

FIG. 6 illustrates an example flow of operations of an IMC macro, according to one or more example embodiments.

FIG. 7 illustrates an example electronic system including an IMC macro, according to one or more example embodiments.

Throughout the drawings and the detailed description, unless otherwise described or provided, the same or like drawing reference numerals may be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

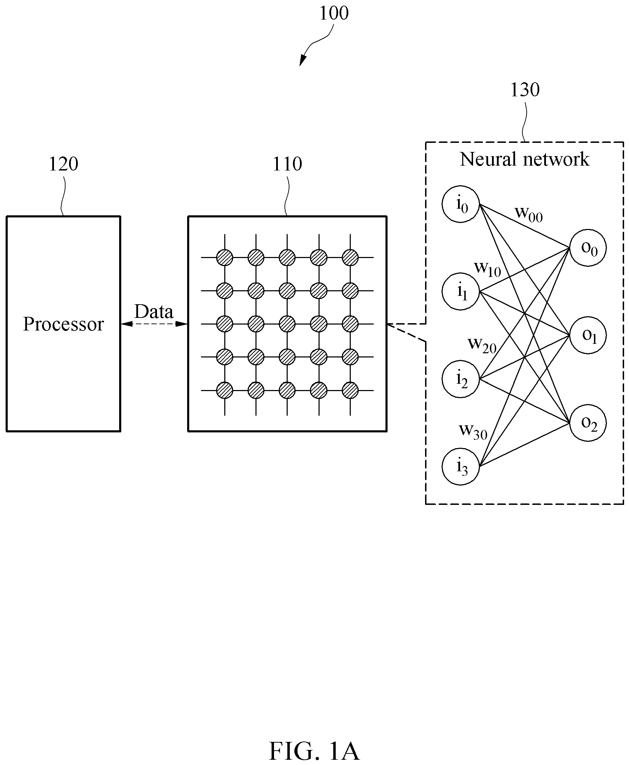

FIG. 1A illustrates an example implementation of an in-memory computing (IMC) system that performs a multiply-accumulate (MAC) operation of a neural network, according to one or more example embodiments. Referring to FIG. 1A, an example structure of an IMC system 100 is illustrated.

In computing devices that use the von-Neumann architecture, there may be a limitation in performance and power due to frequent data movements between an operator portion (e.g., a main processor) and a memory portion. The exchange of data between the operator and memory portions often becomes a bottleneck, where the exchange of data cannot keep pace with the computing operations. IMC is a computing architecture for performing computation operations (e.g., MAC operations) directly on data in a memory in which the data is stored, may be provided to overcome such a limitation in performance and power. Because the operations are performed inside the memory, one or limited basic operations may be performed rather than various operations are performed. IMC may reduce the frequency of data movements between a processor 120 and a memory device 110 and may increase power efficiency. With most IMC devices, the data subject to operations remains stored in the IMC device before, the operations, during the operations, and after the operations. In addition, although IMC devices can perform in-memory operations (logic/math operations), the IMC devices may also function as memory devices, e.g., they may function in ways typical of memory devices, e.g., having similar interfaces, addressing schemes, and the like.

When a host (e.g., the processor 120) incorporating or controlling the IMC system 100 inputs data (that is to be computed) into the memory device 110, the memory device 110 may perform an operation (or computation) by itself on the data. The processor 120 may read a result of the operation from the memory device 110. Accordingly, data movements or data transmission during such a computation process may be minimized.

For example, the IMC system 100 may perform a MAC operation that is frequently used in an artificial intelligence (AI) algorithm and in various other types of operations.

A neural network 130 may be an overall model in which nodes forming a network through a connection therebetween. The neural network 130 may have problem-solving abilities by changing the strengths/weights of the connections through learning. The neural network 130 may include one or more layers of nodes, each connected to another layer. A node in the neural network 130 may include a combination of weights or biases. How the neural network 130 infers (predicts) a result from an arbitrary input may be changed by changing a weight of a node through learning. As shown in FIG. 1A, a computation operation between the layers in the neural network 130 may include, for a given layer of given nodes, a MAC operation that adds results of multiplying, by the weights of the given nodes, each of input values of the given nodes.

The neural network 130 may be a deep neural network (DNN). The neural network 130 may be/include at least one of or a combination of a spiking neural network (SNN) and a neural network (NN) such as a convolutional neural network (CNN), a recurrent neural network (RNN), a perceptron, a multilayer perceptron, a feedforward (FF) network, a radial basis function (RBF) network, a deep feedforward (DFF) network, a long short-term memory (LSTM), a gated recurrent unit (GRU), an autoencoder (AE), a variational autoencoder (VAE), a denoising autoencoder (DAE), a sparse autoencoder (SAE), a Markov chain (MC), a Hopfield network (HN), a Boltzmann machine (BM), a restricted Boltzmann machine (RBM), a deep belief network (DBN), a deep convolutional network (DCN), a deconvolutional network (DN), a deep convolutional inverse graphics network (DC-IGN), a generative adversarial network (GAN), a liquid state machine (LSM), an extreme learning machine (ELM), an echo state network (ESN), a deep residual network (DRN), a differentiable neural computer (DNC), a neural Turing machine (NTM), a capsule network (CN), a Kohonen network (KN), or an attention network (AN), as non-limiting examples.

The MAC operation, which repeats a multiply operation and an add operation, may be expressed by Equation 1, for example.

Equation 1

$$x_{n+1,j} = f\left(\sum_{i=1}^{m} w_{n,i,j} x_{n,i}\right)$$

In Equation 1, a (n+1)th node value may be calculated by applying an appropriate activation function $f()$ to a sum of a product of an nth (preceding) node value and a weight mapped thereto. The MAC operation may be performed by applying remaining data to a memory in which an input $x_{n,i}$ or a weight $w_{n,i,j}$ is stored.

In an example embodiment, the memory device 110 of the IMC system 100 may perform the MAC operation described above and/or a vector-by-matrix multiplication (VMM) operation. The memory device 110 may include IMC macros that perform the MAC operation and/or the VMM operation. The memory device 110 may also be referred to as a "memory array" or an "IMC device."

In addition to performing the MAC operation and/or the VMM operation, the memory device 110 may be used as a memory to store data, and it may be used to drive an algorithm that includes a multiply operation. The memory device 110 may perform logic/math operations directly within the memory without data movements or transmission (although in some cases an operand input may be inputted to the memory device 110, thereby reducing data movements or transmission while improving area efficiency.

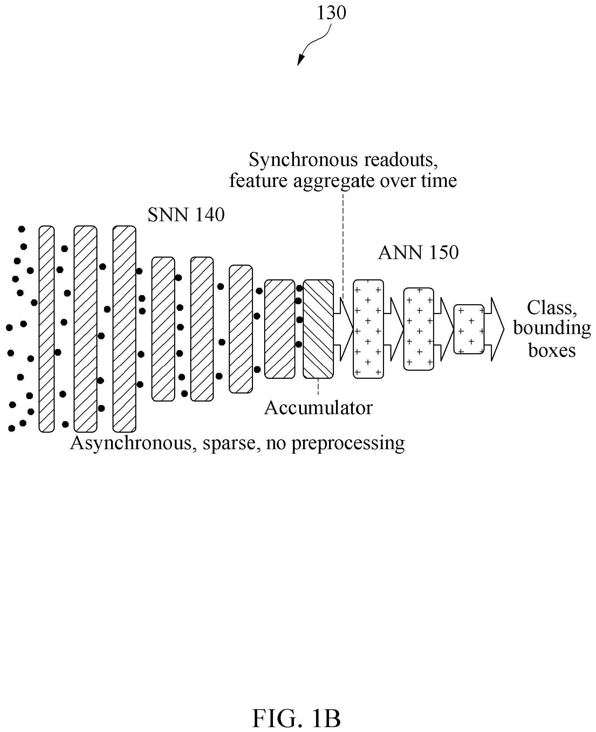

FIG. 1B illustrates an example structure of a neural network, according to one or more example embodiments. Referring to FIG. 1B, illustrated is an example structure of the neural network 130 in which an SNN 140 and an NN 150 are combined. Although a spiking neural network is technically a kind of neural network, the neural network 150 may be considered to be a non-SNN neural network.

The neural network 130 may also be referred to as a "hybrid neural network" 130 in that the SNN 140 and the NN 150 (which is not a spiking NN) are combined.

The hybrid neural network 130 may provide both characteristics of the SNN 140 (e.g., low operation and low power) and characteristics of the NN 150 (e.g., high performance), and may thus correspond to a new network structure in which the SNN 140 and the NN 150 are combined in a hybrid manner.

The memory device 110 may perform a MAC operation and/or a VMM operation with low power, and may be designed to be used in a deep learning-based NN. In general, to improve power efficiency, it may be desirable to configure the memory device 110 with more depth in an input channel direction by having a wider adder tree, thus allowing more efficient processing of the VMM operation that computes a large weight matrix.

In an example embodiment, a static random-access memory (SRAM) IMC macro (of the hybrid neural network 130) has a structure that computes input signals applied bit-serially and multi-bit weights using low power. The SRAM IMC may store membrane potentials and control leakage voltages for the SNN 140 and may, at the same time, for the NN 150, the SRAM IMC may support the VMM operation between an input signal (an input operand) and a weight matrix (a stored operand).

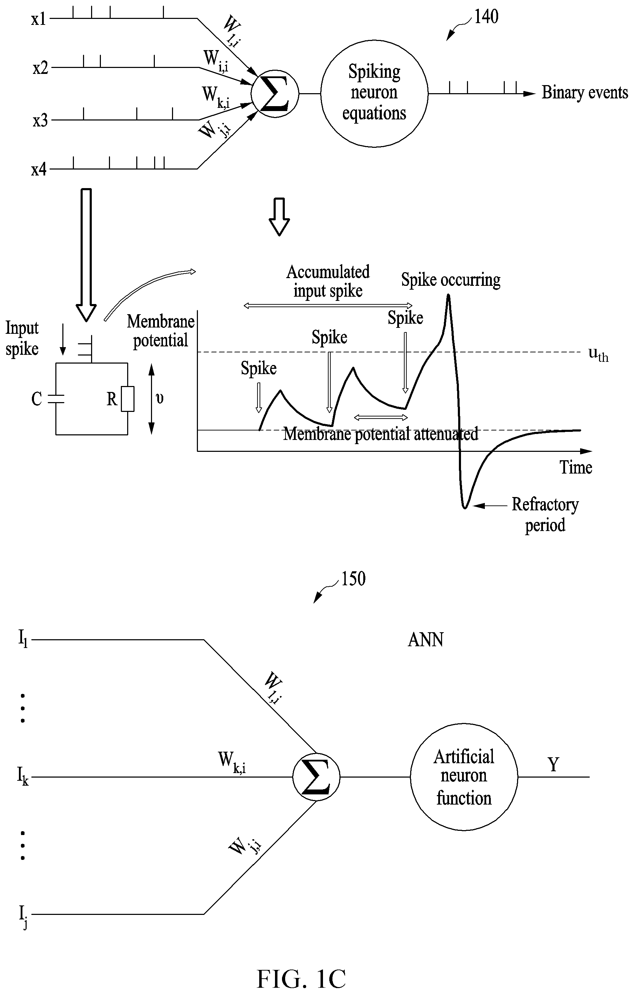

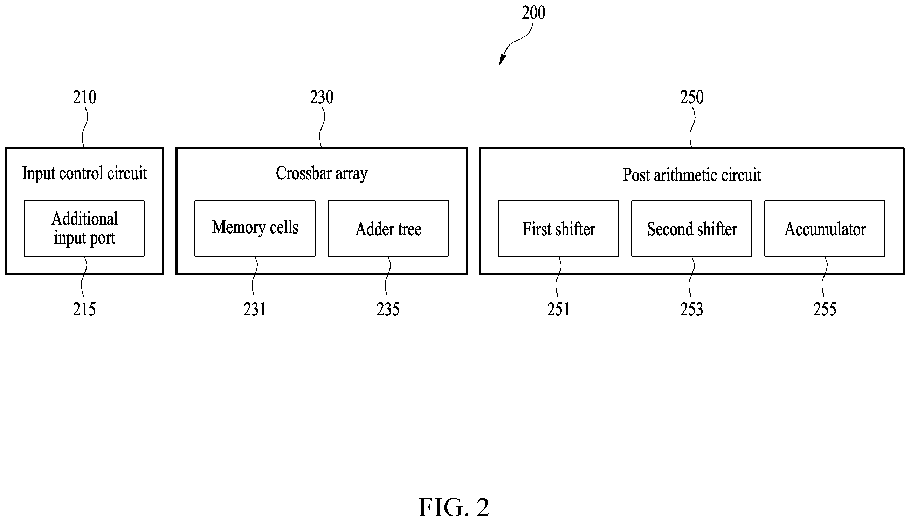

The operations of the SNN 140 and the NN 150 are described with reference to FIG. 1C. In addition, the structure and operations of the IMC macro for supporting the operations of both the SNN 140 and the NN 150 are described with reference to FIGS. 2 to 6.

FIG. 1C illustrates example operations of an SNN and an NN, according to one or more example embodiments. Referring to FIG. 1C, illustrated are the operations of the SNN 140 and the NN 150.

The SNN 140 may configured such that a concept of time is included in interactions between nodes and nodes, and the interactions are generally referred to as spikes. In the SNN 140, an internal state of a node (i.e., neuron) may be changed by time information and spiking signals transmitted from other nodes. When, due to the incoming spikes, the changed internal state of the node satisfies a specific condition, the node may generate its own spike.

For example, when a first node (neuron) is upstream from and connected to a second node (neuron), the first node may transmit information to the second node. For example, the first node may sequentially transmit spike signals three times to the second node along a time axis (as shown in FIG. 1C). In this case, an action potential of the second neuron may rise to a certain value each time it receives spiking signals (e.g., a first spiking signal and a second spiking signal) from the first node and that rise (until reinforced by another spike) is gradually attenuated by a leaky current.

When a third spiking signal is transmitted to the second node and the action potential of the second node consequently exceeds a threshold voltage $U_{th}$, an output spiking signal "1" may be generated from the second node. In conjunction with the generation of the output spiking signal, the value of the action potential of the second node may be set to "0." The foregoing process may be similarly applied even when multiple nodes are connected (e.g., when there are multiple first nodes connected to the second node).

For understanding, analogy to biological neurons may be helpful. The interior and exterior of a cell body of a neuron may be separated by a cell membrane (cell wall), which may have a membrane potential specific to that cell. This cell membrane may be modeled as a leaky-integrate-and-fire (LIF) neuron model, which is shown in the top half of FIG. 1C.

The LIF neuron model may model the following rules of neurons.

(i) The LIF neuron model may calculate a sum of spikes of pre-synaptic neurons (first nodes). In this case, the spikes of the pre-synaptic neurons may be considered power coming from outside and may correspond to a power source of a neuron.

(ii) The LIF neuron model may generate an output spiking signal when a membrane potential U exceeds its threshold voltage $U_{th}$ and may be initialized to a reset voltage. A neuron may store sodium ions within the neuron through an action potential transmitted to a pre-synaptic neuron. Such a feature may be modeled as a capacitor C that temporarily stores power. In addition, the membrane potential may have a voltage that is increased by the action potential and returns to the reset voltage over time as the ions escape through the (cell) membrane, and this behavior may be modeled as a resistor R.

Based on the foregoing, the LIF neuron model may be implemented as a resistor-capacitor (RC) circuit. The cell membrane may be represented as the capacitor C of the RC circuit, and a potential difference between both ends of a storage battery may be represented as the membrane potential. When an external current I is input to the RC circuit, the capacitor C corresponding to the storage battery may be charged. In this case, pre-synaptic neurons may receive input spiking signals, and when the action potential (membrane potential) of post-synaptic neurons exceeds the threshold voltage $U_{th}$ as the input spiking signals are accumulated, the post-synaptic neurons may generate an output spike. The post-synaptic neurons generating the output spike may recover after going through a refractory period. The "refractory period" described herein may be a period of briefly maintaining an initialized/reset state immediately after the generation of the spike.

(iii) In the LIF neuron model, the voltage of the membrane potential may continuously leak, i.e., the membrane may gradually dissipate voltage.

Turning to the NN 150, the NN 150 may have a network structure in which nodes are connected by links with weights (each link having its own weight). The NN 150 may include, for example, an input layer that receives an input signal, an output layer that outputs a result processed by a hidden layer, and the hidden layer disposed between the input layer and the output layer and is not generally exposed to the outside (this is not a strict requirement). There may be multiple hidden layers. Input data received through the input layer may be processed by the hidden layer and may then be output through the output layer.

An input node included in the input layer may transmit the input data to the hidden layer as-is without any special operation, and thus the input node may correspond to an input value itself. Nodes in the hidden layer and the output layer may perform specific operations on the received input data.

The nodes in layers other than the input layer may receive their input values through a link/connection, calculate a weighted sum, and generate an output signal by applying an activation function (or the like) to the weighted sum. The output signal may be a final output value (in the case of an output layer node) or it may be an input value for another node. In this case, the activation function (or the like) may determine whether a node is activated. The node may be activated when the weighted sum is greater than or equal to a threshold value of the activation function, and the node may be not activated when the weighted sum is less than the threshold value.

The weighted sum may be a multiply operation and a repeated add operation between inputs and respective weights and may also be referred to as a "MAC operation." A circuit in which the MAC operation is performed may be referred to as an IMC circuit in that the MAC operation is performed using a memory to which a computation operation function is incorporated.

FIG. 2 illustrates an example IMC macro, according to one or more example embodiments. Referring to FIG. 2, an IMC macro 200 may include an input control circuit 210, a crossbar array 230, and a post arithmetic circuit 250, details of which will become apparent as the other Figures are discussed.

The IMC macro 200 may be configured based on an SRAM, for example, and may perform a digital-based MAC operation and/or VMM operation. Regarding the SRAM aspect, cells that store bits may have SRAM characteristics.

The IMC macro 200 may operate as a hybrid network in which an SNN and an NN are combined. For example, the IMC macro 200 may set an operating mode to a first mode for the SNN or a second mode for the NN depending on a command transmitted from a host. The host may repeatedly switch the MIC macro 200 back and forth between the modes (which may also be referred as network modes). The "first mode" may refer to the operating mode in which the operations of the SNN (but not the NN) are active, and the "second mode" may refer to the operating mode in which the operations of the NN (but not the SNN) are active.

The input control circuit 210 may, depending on the operating mode, (i) generate a signal in which a predefined pattern is applied to an input signal (e.g., an input signal serving as an input operand of a MAC/VMM operation), or (ii) transmit (feed back), to the crossbar array 230, a previous operation result of the crossbar array 230. The input signal may be, for example, a spiking signal for the SNN or a feature map for the NN. The previous operation result may be , for example, a previous membrane-potential value of the SNN.

When the operating mode is set to the first mode for the SNN, the input control circuit 210 may set the predefined pattern to "1." When the operating mode is set to the second mode for the NN, the input control circuit 210 may set the predefined pattern to a pattern or bias value corresponding to the number of bits of the input signal. For example, when the bit number of the input signal is 4 bits, the predefined pattern may be "0001 ", as a non-limiting example.

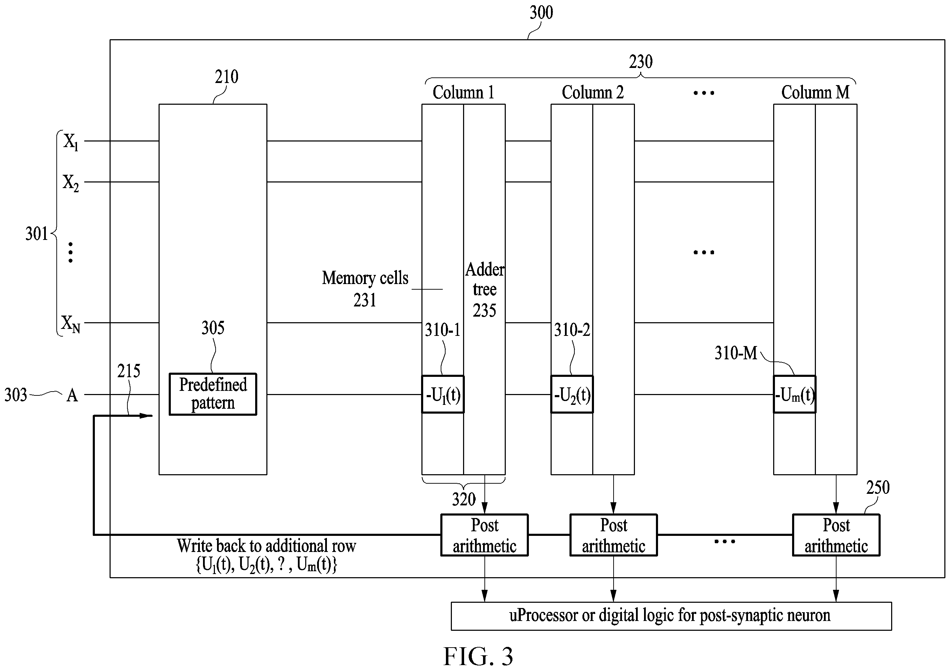

The input control circuit 210 may include an additional input port 215 (also shown in FIG. 3) that is configured to transmit, depending on the operating mode, (i) a processed value of the previous membrane-potential value or (ii) a bias value for each column in a set of columns, and the transmitting may be to an additional row (e.g., additional rows 310-1, 310-2, ..., and 310-M in FIG. 3) of each of memory cells 231. The bias value for each of the columns may be, for example, a static bias value, which may differ among the columns. The additional row and the additional input port are referred to as "additional" because they are not found in previous IMC devices (other components mentioned herein may also be new).

When the operating mode is in the first mode for the SNN, the additional input port 215 may transmit, to the additional row of each of the memory cells 231, the processed value obtained by the input control circuit 210 by multiplying, by -1, the previous membrane-potential value that is fed back to the control circuit 210 from the post arithmetic circuit 250. When the operating mode is in the second mode for the NN, the additional input port 215 may transmit the bias values of the respective columns to the respective additional rows of each of the memory cells 231. For example, when the operating mode is in the first mode, the additional rows may store the processed previous membrane-potential value. And when the operating mode is in the second mode, the additional rows may store the bias values for the respective columns.

In an example embodiment, the IMC macro 200 may include the memory cells 231 configured in the form of the crossbar array 230. The memory cells 231 may include word lines, memory cells (i.e., bit cells), and bit lines. The word lines may be used to receive input data or an input signal of a neural network (e.g., the neural network 130 in FIG. 1). For example, when there are N word lines, a value corresponding to the input signal of the neural network may be applied to the N word lines.

For example, the crossbar array 230 may perform a multiply operation (e.g., a VMM operation) between a single vector and a matrix over several cycles, and this operation may be used both in the SNN (which is configured to perform spiking-based signal processing) and the NN, which may be a discrete-domain (non-spiking) neural network, for example a CNN, an RNN, or an LSTM, to name some examples of digital neural network architectures.

The crossbar array 230 may include the memory cells 231 including at least one additional row that stores a result of processing the fed-back previous operation result (e.g., the previous membrane-potential value) and an adder tree 235 corresponding to the memory cells 231.

The memory cells 231 may include, as non-limiting examples, at least one of a diode, a transistor (e.g., a metal-oxide-semiconductor field-effect transistor (MOSFET)), an SRAM bit cell, or a resistive memory. Hereinafter, the memory cells 231 will be described using SRAM memory cells as an example, but examples are not necessarily limited thereto.

The memory cells 231 may include rows that store weights (e.g., a stored operand) corresponding to an input signal (e.g., an input operand). The memory cells 231 may be, for example, an SRAM memory array. The adder tree 235 may be, for example, a digital adder tree. Although examples described herein refer to weights stored in the memory cells 231, the examples and embodiments described herein are not limited to any particular type of application or data.

The crossbar array 230 may receive an input signal or input data (input operand) as applied bit-serially and perform a multiply operation between multi-bit weights stored in the memory cells 231 and the one-bit input signal, and may add results of the multiply operation through the adder tree 235. A result of the adding by the adder tree 235 obtained every cycle may be output as a final operation result through an accumulator 255 of the post arithmetic circuit 250.

The adder tree 235 may add (i) a first operation result between the input signal and the weights and (ii) a second operation result between the predefined pattern and the previous operation result. The adder tree 235 may simultaneously perform (i) a first multiply operation between the input signal and the weights stored in the memory cells 231 and (ii) a second multiply operation between the weights and the previous operation result, for each of the columns, at each operation.

The crossbar array 230 may store a result of adding up, by the adder tree 235, (i) a first multiply-operation result obtained by adding individual products (multiplications) between the weights stored in the memory cells 231 and the input signal and (ii) a second multiply-operation result obtained by multiplying the predefined pattern and a value stored in the additional row. In this case, the individual products between the input signal and the weights may be added within a column. In addition, a pattern input (an input that is a pattern) may be multiplied by data stored in the additional row, and a result of that multiplying may also be added in the same column. Subsequently, the two results described above may be added again within the same column by the adder tree 235. Succinctly, the foregoing process may involve a multiplication of {input, pattern} and {weight, additional row} and, after the individual multiplications, the results may be added in the adder tree 235.

The post arithmetic circuit 250 may, depending on the operating mode, selectively perform a first operation corresponding to the SNN or a second operation corresponding to the NN.

The post arithmetic circuit 250 may include, for example, a first shifter 251, a second shifter 253, and the accumulator 255. When the operating mode is in the first mode, the first shifter 251 may adjust an operation result of the adder tree 235 by a right shift operation. When the operating mode is the second mode, the second shifter 253 may adjust a value stored in the accumulator 255 by a left shift operation.

When the operating mode is in the first mode, the accumulator 255 may store a membrane-potential value. When the operating mode is in the second mode, the accumulator 255 may convert a bit-serial calculation result into a multi-bit calculation result.

For example, when the operating mode is in the first mode, the post arithmetic circuit 250 may perform, by the first shifter 251, the right shift operation on an operation result of an operation between a spiking signal and a weight, which is added by the adder tree 235. The post arithmetic circuit 250 may bypass, by the second shifter 253, the membrane-potential value stored in the additional row. The post arithmetic circuit 250 may store, in the accumulator 255, a result of the right shift operation and the bypassed membrane-potential value.

Alternatively, when the operating mode is in the second mode, the post arithmetic circuit 250 may cause a result to bypass the first shifter 251 and instead go into the accumulator 255, where this result is a result of adding (i) a first multiply operation between the weights stored in the memory cells 231 and the input signal and (ii) a second multiply operation between the predefined pattern and the bias value for each of the columns that is stored in the additional row. The post arithmetic circuit 250 may perform, by the second shifter 253, the left shift operation on the operation result of the accumulator 255 corresponding to the input signal applied bit-serially. The post arithmetic circuit 250 may generate a multi-bit result by accumulating a result of the left shift operation through the accumulator 255.

The IMC macro 200 may be integrated into at least one device, for example, a mobile device, a mobile computing device, a mobile phone, a smartphone, a personal digital assistant (PDA), a fixed location terminal, a tablet computer, a computer, a wearable device, a laptop computer, a server, a music player, a video player, an entertainment unit, a navigation device, a communication device, a global positioning system (GPS) device, a television (TV), a tuner, a satellite radio, a song player, a digital video player, a digital video disc (DVD) player, a vehicle, one of parts of the vehicle, an avionics system, a drone, a multicopter, or a medical device.

In an example embodiment, using the IMC macro 200 may allow selectively performing the operation for the SNN and the operation for the NN without additional hardware configuration, thereby improving the operational efficiency of the SNN and the NN in terms of power, hardware, and/or performance.

The IMC macro 200 may be implemented as a neural network device, an IMC circuit, or a MAC operation circuit and/or device, as non-limiting examples.

FIG. 3 illustrates an example structure and operation of an IMC macro, according to one or more example embodiments. Referring to FIG. 3, illustrated is an example structure of an SRAM IMC macro 300.

The input control circuit 210 may receive an external input signal 301. For example, when an operating mode is in a first mode, the input signal 301 may be in the form of spiking signals of nodes in a preceding layer. When the operating mode is in a second mode, the input signal 301 may be in the form of a feature map (a non-spiking signal).

The input control circuit 210 may include an additional input port 215 that receives a static bias value or a previous membrane-potential value. The input control circuit 210 may apply, to the input signal 301, a predefined pattern 305 (indicated as PP in some of the drawings) or idle counter value transmitted through the additional input port 215 and transmit it as an input to the memory cells 231. The memory cells 231 may include bit cells corresponding to memory banks and an operator circuit that outputs a signal corresponding to an operation result corresponding to each of the bit cells. The memory cells 231 may be, for example, cells of an SRAM memory array.

In this case, the predefined pattern 305 may be hard-wired into the hardware of the SRAM IMC macro 300 or may be set in a register before run-time.

The SRAM IMC macro 300 may include, as the crossbar array 230, an operation module 320 for each column, which includes the memory cells 231 enabling multiplications and the adder tree 235 adding all operation results and outputting a result of the addition.

For example, the crossbar array 230 may include M columns receiving an external input and q additional rows 310. Although the crossbar array 230 may have multiple additional rows 310, an example case in which the number of additional rows 310 is one (i.e., q = 1), which is the most basic structure, is described below.

When the operating mode is in the first mode, the crossbar array 230 may have N rows receiving N respective input signals 301 (e.g., signals of a pre-synaptic neuron) as an input. The crossbar array 230 may also have an additional row 310 receiving A (here, "A" is a variable) additional input signals 303 corresponding to the predefined pattern. In this case, operation results for the N input signals 301 and the A additional input signals 303 may be added through the adder tree 235 having a length of N + A.

For a previous operation result (e.g., U(t), where t represents time), the input control circuit 210 may apply arithmetic-negation thereto (forming, e.g., -U(t)), and may store the thus-processed previous operation result (e.g., -U(t)) in the additional row 310. For convenience, the processed previous operation result -U(t) may be a result that reflects a leakage voltage generated from an SNN.

Each of the memory cells 231 of the crossbar array 230 may include at least one additional row 310 storing the processed previous operation value -U(t), which, as noted, is obtained by the input control circuit 210 performing arithmetic-negation on an operation result (e.g., a membrane-potential value U(t)) received from the post arithmetic circuit 250. For example, when the operating mode is in the first mode, the input control circuit 210 arithmetic-negate the operation result received from the post arithmetic circuit 250 and may then directly write it on the additional row 310 (e.g., 310-1, 310-2, ...., and 310-M) of each of the memory cells 231. When the operating mode is in the second mode, the input control circuit 210 may store a fixed bias value in the additional row 310. The bias value stored in the additional row 310 may later be added to a subsequent operation result.

Each of the memory cells 231 of the crossbar array 230 may have the additional row 310 that stores -U(t+Δ) to which the previous operation result is applied, for efficient computation of an SNN. The additional row 310 may be updated directly within the SRAM IMC macro 300.

The SRAM IMC macro 300 may add respective outputs of the memory cells 231 by the adder tree 235 and output a final operation result through the post arithmetic circuit 250.

The SRAM IMC macro 300 may store a weight in the SRAM memory cells 231 and then apply the input signal 301 to perform an operation. Depending on whether the operating mode is in the first mode or the second mode, the SRAM IMC macro 300 may perform the operation by combining an input signal and a predefined pattern.

For example, when the operating mode is in the first mode, the SRAM IMC macro 300 may perform a multiply operation between (i) a spiking signal, which is an input signal, and (ii) weights stored in the memory cells 231; the multiply operation may be in the operation module 320 for each column. The SRAM IMC macro 300 may add results of the multiply operation by the adder tree 235 and transmit a result of the addition to the post arithmetic circuit 250.

For example, when the operating mode is in the second mode, the SRAM IMC macro 300 may add, by the adder tree 235, results of (i) applying a bias value (e.g., PP(b) $\times$ Bm) stored in the predefined pattern to (ii) a multiply-operation result (e.g., X(b)*(W$_m$)) between a feature map value X(b), which is the input signal 301, and the weights W$_m$ stored in the memory cells 231. A result of the addition may be transmitted to the post arithmetic circuit 250. In this case, the bias value may vary for each column.

The adder tree 235 may add the multiply-operation results respectively corresponding to the SRAM memory cells 231 and transmit a result of the addition to the post arithmetic circuit 250. The post arithmetic circuit 250 may perform an add operation by performing bit-shifting on an add operation result of a corresponding bitwise digit, depending on the operating mode. For example, when the operating mode is in the second mode, the post arithmetic circuit 250 may combine (i) an add operation result of a subsequent bitwise digit with (ii) the bit-shifted add operation result and accumulate multiply-operation results bitwise, and thus output a multi-bit result corresponding to a final MAC operation result.

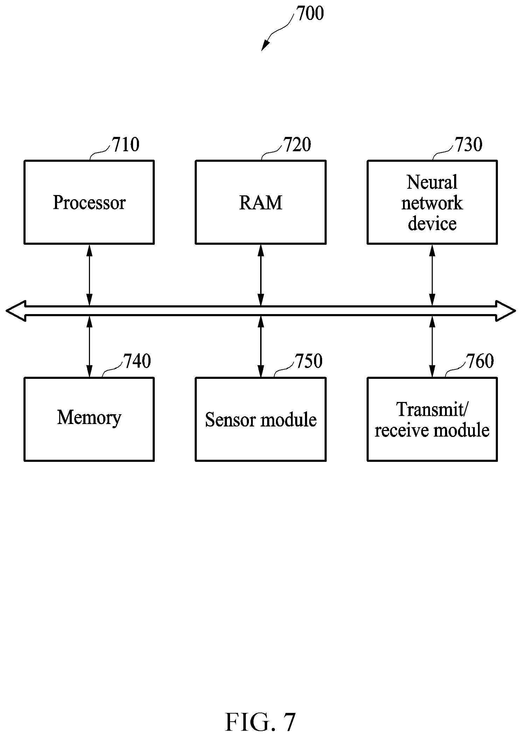

In a case in which the input control circuit 210 receives input data of a single bit, such as a spike signal, bit-shifting may not be required, and thus the post arithmetic circuit 250 may directly output an add operation result of the adder tree 235, or alternatively store it in an output register (not shown). A final add operation result (e.g., a MAC operation result) stored in the output register may be read by, for example, a processor (e.g., a processor 710 in FIG. 7) of an electronic system and used for other computation operations.

The post arithmetic circuit 250 may finally combine operation results output from the respective columns to output a result of the combination as the MAC operation result.

The post arithmetic circuit 250 may support both an SNN and an NN. The post arithmetic circuit 250 may transmit an operation result U(t+$\Delta$) to the input control circuit 210 to allow it to be converted therein to -U(t+$\Delta$), and may allow the input control circuit 210 to write -U(t+$\Delta$) directly into the additional row 310.

The adder tree 235 in the SRAM IMC macro 300 may simultaneously add (i) operation results between N input signals (e.g., spiking signals) and N weights stored in the memory cells 231, and (ii) operation results for the previous membrane-potential value U(t+$\Delta$), for each column, at each operation.

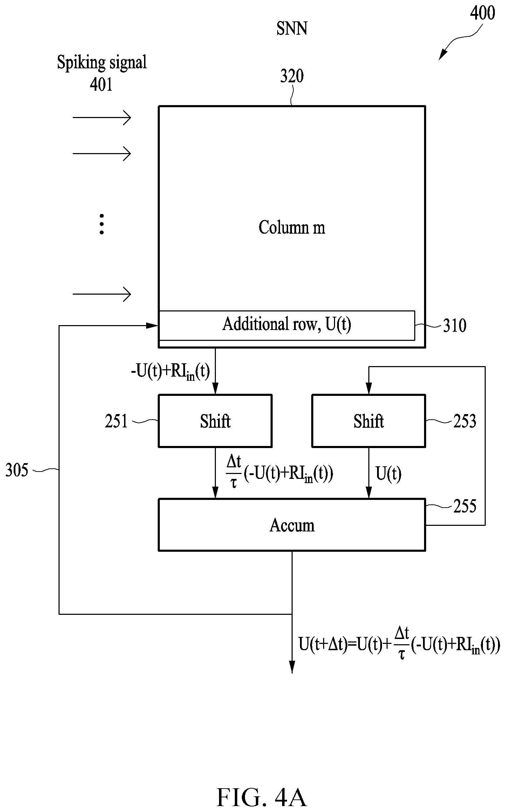

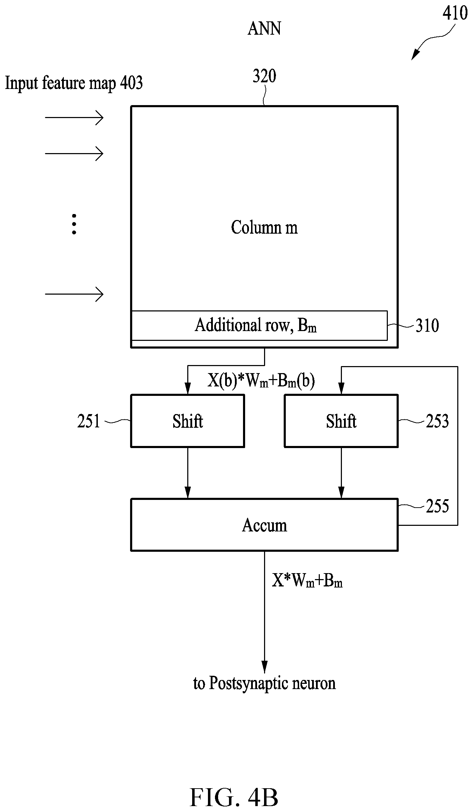

The post arithmetic circuit 250 may use two shifters (e.g., the first shifter 251 and the second shifter 253) shown in FIGS. 4A and 4B according to the first mode and the second mode.

For example, when the operating mode is in the first mode, the post arithmetic circuit 250 may transmit an operation result of the adder tree 235 to the first shifter 251 and accumulate a result of a right shift operation performed by the first shifter 251 in the accumulator 255.

When the operating mode is in the second mode, the post arithmetic circuit 250 may transmit the operation result of the adder tree 235 to the second shifter 253 and accumulate a result of a left shift operation performed by the second shifter 253 in the accumulator 255.

In an example embodiment, when using the single SRAM IMC macro 300 it may selectively operate the SNN and the NN and may thus improve the overall system power efficiency. In addition, efficiently operating a hybrid neural network including the SNN and the NN may contribute to effectively configuring a large-scale SNN system.

FIGS. 4A and 4B illustrate example operations of a post arithmetic circuit where the operations depend on an operation mode, according to one or more example embodiments. In an example embodiment, the post arithmetic circuit may include: the first shifter 251, which is configured to adjust a result of addition obtained through an adder tree included in the operation module 320 of the SRAM IMC macro 300; the second shifter 253, which is configured to adjust a value stored in the accumulator 255; and the accumulator 255. In FIGS. 4A and 4B, the operation module 320 is in an arbitrary m-th column (out of the M columns)

For example, when the operating mode is in a first mode, the first shifter 251 may adjust an operation result of the adder tree by a right shift operation to apply a

$$\frac{\Delta t}{\tau}$$

value of dt/tau ( ) as in the form of $2^{-t}$ (where, t is a natural number greater than 1, i.e., t > 1) that is less than 1.

When the operating mode is in a second mode, the second shifter 253 may adjust a value stored in the accumulator 255 to a factor of x2 by a bitwise left shift operation.

Referring to FIG. 4A, diagram 400 shows an operation of the post arithmetic circuit 250 performed when the operating mode of an IMC macro is in the first mode.

When the operating mode is in the first mode for an SNN, the post arithmetic circuit 250 may receive, from the operation module 320 of the SRAM IMC macro 300, a result (e.g., - U(t)+RI$_{in}$(t)) of adding, in the adder tree, (i) a previous membrane-potential value -U(t) to (ii) an operation result RI$_{in}$(t) between a spiking signal I$_{in}$(t) and a weight R.

The post arithmetic circuit 250 may transmit the output -U(t)+RI$_{in}$(t) of the operation module 320 to the first shifter 251, and the first shifter 251 may transmit, to the accumulator 255, a result (e.g., $\frac{\Delta t}{\tau}(-U(t)+RI_{in}(t))$ ) obtained by performing the right shift operation on-U(t) +RI$_{in}$(t). In this case, $dt/tau(\frac{\Delta t}{\tau})$ may correspond to a time constant.

In the first mode, the second shifter 253 may not perform a shift operation, but instead simply bypasses (passes through) a membrane-potential value -U(t+Δ) stored in the additional row 310.

The accumulator 255 may add the membrane-potential value -U(t+Δ) bypassed from the second shifter 253 and the result $\frac{\Delta t}{\tau}(-U(t)+RI_{in}(t))$ of the right shift operation transmitted from the first shifter 251, and transmit an updated membrane-potential value U(t+Δ) to the operation module 320 through an input control circuit.

As such, an operation result of the IMC macro may be finally transmitted to the accumulator 255 (also indicated as "Accum" in the drawings), and a value transmitted to the accumulator 255 may be transmitted to the operation module 320 through the input control circuit along with a control signal for write-back.

The input control circuit may arithmetic-negate the updated membrane-potential value U(t+Δ) into -U(t+Δ) and store the latter in the additional row 310. In this case, each of m columns may have the -U(t+Δ) value. Since the IMC macro performs a row-wise write, it may simultaneously write the -U(t+Δ) value in the additional row 310 of the M columns. In the first mode, the accumulator 255 may store a membrane-potential value.

Referring to FIG. 4B, diagram 410 shows an operation of the post arithmetic circuit 250 performed when the operating mode of an IMC macro is in the second mode.

When the operating mode is in the second mode for an NN, the post arithmetic circuit 250 may receive, from the operation module 320 of the SRAM IMC macro 300, a result (e.g., X(b)*Wm+PP(b)*Bm) of adding, in the adder tree, (i) a bias value PP(b)*Bm stored in the additional row 310 to (ii) an operation result between an input signal X(b) and a weight Wm. In this case, b denotes a bit number, and X(b) may denote b-th input bits. In this case, bits may be numbered in reverse order from the most significant bit (MSB) to the least significant bit (LSB). PP(b) may correspond to an input bit of a b-th pattern starting from the MSB.

When PP(b) is accumulated as multiple bits, the result of adding the bias value may become X*Wm+Bm. In this case, and as above, m is a column index.

In the second mode, the additional row 310 may store a bias value B for each column, and the operation module 320 may apply a predefined pattern (PP) value to perform an operation, such as, for example, $Y_m = X \times W_m + B_m \times PP$. In this case, $Y_m$ denotes an operation result of an m-th column. $W_m$ denotes a weight corresponding to the m-th column in an $N \times M$ weight matrix W, for example. X denotes an input vector consisting of {X1, X2, ..., $X_n$}. The PP value may be selected and set by the user. In this case, when the PP value is "1," an operation result of the operation module 320 may be $Y_m = X \times W_m + B_m$.

In the second mode, the first shifter 251 may bypass (pass-through), into the accumulator 255, a result (e.g., $X \times W_m + B_m \times PP$ or $X \times W_m + B_m$) of adding (i) a first multiply operation (e.g., $X \times W_m$) between the weight $W_m$ stored in memory cells and the input signal X and (ii) a second multiply operation (e.g., $B_m \times PP$) between the bias value $B_m$ for each of columns stored in the additional row 310 and the PP value. In this case, the second shifter 253 may perform the left shift operation on the operation result (e.g., $X \times W_m + B_m$) of the accumulator 255 corresponding to the input signal X that is applied bit-serially.

In the second mode, the accumulator 255 may perform a function of converting a serial calculation result (e.g., a result of the left shift operation) that is applied bitwise into a multi-bit calculation result.

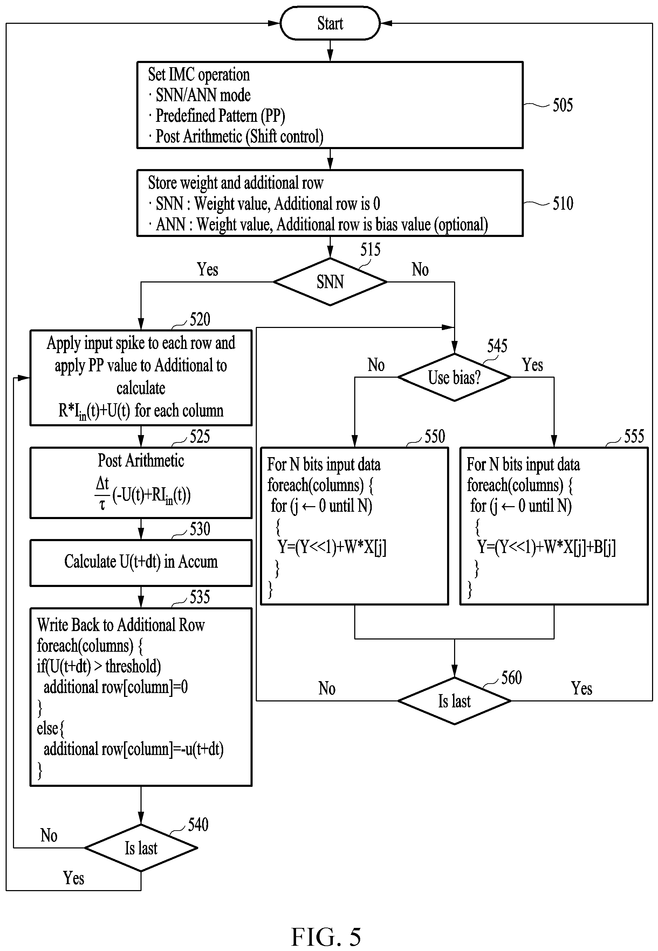

FIG. 5 illustrates an example flow of operations of an IMC macro, according to one or more example embodiments.

Referring to FIG. 5, an IMC macro of an example embodiment may selectively perform a first operation corresponding to an SNN or a second operation corresponding to an NN by performing operations 505 to 560 described below.

In operation 505, the IMC macro may perform initialization, such as, for example, setting an operating mode, a predefined pattern (PP), and/or a shifter of a post arithmetic circuit based on the operating mode. The operating mode may be transmitted through a command from an external device, such as, a host.

In operation 510, the IMC macro may store weights in rows of memory cells and may also store information in an additional row. For example, when the operating mode is in the first mode, the IMC macro may store zero ("0") in the additional row. When the operating mode is in the second mode, the IMC macro may store a bias value in the additional row. In this case, the bias value may be used selectively and may be different for each column.

In operation 515, the IMC macro may determine whether the set operating mode is in the first mode for the SNN, e.g., by checking the value of a register.

In operation 520, when it has been determined in operation 515 that the operating mode is in the first mode, the IMC macro may apply an input spiking signal to each column of the memory cells and apply a PP value to the additional row to calculate $RI_{in}(t)+U(t)$ for each column.

In operation 525, the IMC macro may perform an operation (e.g., $\frac{\Delta t}{\tau}(-U(t)+RI_{in}(t))$ ) by the post arithmetic circuit.

In operation 530, the IMC macro may calculate an updated membrane-potential value by an accumulator.

In operation 535, the IMC macro may transmit the updated membrane-potential value $U(t+\Delta)$ calculated by the accumulator, and that value may be transmitted to the additional row through an input control circuit along with a control signal for write-back. In this case, when the updated membrane-potential value $U(t+\Delta)$ is greater than a threshold value, a value of the additional row for a corresponding column may be "0." In addition, when the updated membrane-potential value $U(t+\Delta)$ is less than or equal to the threshold value, the value of the additional row for the corresponding column may be -u(t+dt).

In operation 540, the IMC macro may determine whether input data is a last one. When it is determined in operation 540 that the input data is not the last one, the IMC macro may again perform operation 520.

When it is determined in operation 540 that the input data is the last one, the IMC macro may return to the "Start" point or end the operations.

In operation 545, when it is determined in operation 515 that the operating mode is in not the first mode, i.e., that the operating mode is in the second mode for the NN, the IMC macro may determine whether to use a bias value. When it has been determined not to use the bias value, the IMC macro may apply all zeroes ("0"s) as an input pattern value such that a multiply-operation result is forced to "0."

In operation 550, when it is determined in operation 545 not to use the bias value, the IMC macro may perform an operation (e.g., Y=(Y<<1)+W*X[j] ) in which the bias value is not reflected for N-bit input data (or input signal) for each column.

In operation 555, when it is determined in operation 545 to use the bias value, the IMC macro may perform an operation (e.g., Y=(Y<<1)+W*X[j] ) in which the bias value is reflected for the N-bit input data (or input signal) for each column.

In operation 560, the IMC macro may determine whether the input data is the last one. When it is determined in operation 560 that the input data is not the last one, the IMC macro may again perform operation 545.

When it is determined in operation 560 that the input data is the last one, the IMC macro may return to the "Start" point or end the operations.

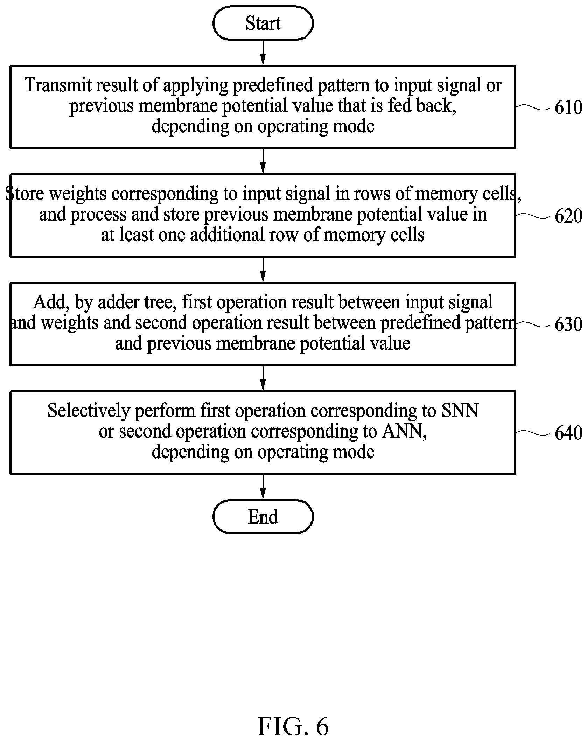

FIG. 6 illustrates an example flow of operations of an IMC macro, according to one or more example embodiments. Referring to FIG. 6, an IMC macro of an example embodiment may selectively perform a first operation corresponding to an SNN or a second operation corresponding to an NN by performing operations 610 to 640 described below.

In operation 610, depending on an operating mode, the IMC macro may transmit a result of applying a predefined pattern to an input signal or a previous membrane-potential value that is fed back. The input signal may be a spiking signal for the SNN or a feature map for the NN. The fed-back previous membrane-potential value may include a previous membrane-potential value of the SNN. The IMC macro may, depending on the operating mode, transmit, to an additional row of each of memory cells, either a processed value of the previous membrane-potential value or a bias value, for each of the columns.

For example, when the operating mode is in a first mode for the SNN, the IMC macro may update the additional row by transmitting the processed value obtained by multiplying the previous membrane-potential value by -1 (or otherwise arithmetically-negating the value) to the additional row of each of the memory cells. Alternatively, when the operating mode is in a second mode for the NN, the IMC macro may update the additional row by transmitting the bias value for each of the plurality of columns of the memory cells to the additional row of each of the memory cells.

In operation 620, the IMC macro may store weights corresponding to the input signal in rows of the memory cells, and in operation 610 may process and store the fed-back previous membrane-potential value that is transmitted to at least one additional row of the memory cells.

In operation 630, the IMC macro may add, by an adder tree, (i) a first operation result between the input signal and the weights and (ii) a second operation result between the predefined pattern and the fed-back previous membrane-potential value.

In operation 640, the IMC macro may, depending on the operating mode, selectively perform a first operation corresponding to the SNN or a second operation corresponding to the NN.

For example, when the operating mode is in the first mode for the SNN, the IMC macro may perform, by a first shifter, a right shift operation on an operation result between a spiking signal and the weights, which is added by the adder tree. The IMC macro may bypass (pass-through) a membrane-potential value stored in the additional row by a second shifter, and store a result of the right shift operation and the bypassed membrane-potential value in an accumulator. Alternatively, when the operating mode is in the second mode for the NN, the IMC macro may bypass (pass-through), by the first shifter, into the accumulator, a result of adding (i) a first multiply operation between the weights stored in the memory cells and the input signal and (ii) a second multiply operation between a value of the predefined pattern and the bias values of the respective columns that are stored in the additional row. The IMC macro may perform, by the second shifter, a left shift operation on an operation result of the accumulator (that operation result corresponding to the input signal applied bit-serially). The IMC macro may generate a multi-bit result by accumulating results of the left shift operation through the accumulator.

FIG. 7 illustrates an example electronic system including an IMC macro, according to one or more example embodiments. Referring to FIG. 7, an electronic system 700 of an example embodiment may analyze in real time input data based on a neural network (e.g., the neural network 130 in FIG. 1) to extract valid information, and may determine a situation or may control components of an electronic device on which the electronic system 700 is mounted, based on the extracted information. The electronic system 700 may be mounted on at least one of, as non-limiting examples, a drone, a robotic device such as an advanced driver assistance system (ADAS), a vehicle, a smart TV, a smartphone, a medical device, a mobile device, an image display device, an instrumentation device, an Internet of things (IoT) device, and other types of electronic devices.

The electronic system 700 may include a processor 710, a random-access memory (RAM) 720, a neural network device 730, a memory 740, a sensor module 750, and a transmit/receive module 760. The electronic system 700 may further include an input/output module, a security module, a power control device, and the like. Some of the hardware components of the electronic system 700 may be mounted on at least one semiconductor chip.

The processor 710 may control the overall operation of the electronic system 700. The processor 710 may include a single processor core (e.g., single core) of any type of processor (including examples mentioned herein) or may include multiple processors of possibly varying type (e.g., multi-core). Although "processor" (e.g., processor 710) is used in the singular in places, this term refers to "one or more processors". The processor 710 may process or execute programs and/or data stored In the memory 740. In some example embodiments, the processor 710 may execute the programs stored in the memory 740 to control the functions of the neural network device 730. The processor 710 may be implemented as a central processing unit (CPU), a graphics processing unit (GPU), an application processor (AP), and the like.

The RAM 720 may temporarily store programs, data, or instructions. For example, the programs and/or data stored in the memory 740 may be temporarily stored in the RAM 720 in response to control or boot code from the processor 710. The RAM 720 may be implemented as a memory, such as, for example, a dynamic RAM (DRAM) or a static RAM (SRAM).

The neural network device 730 may perform a computation operation of a neural network based on received input data and may generate various information signals based on a result of performing the operation. The neural network may include, as non-limiting examples, a CNN, an RNN, a fuzzy neural network (FNN), a deep belief network (DBN), a restricted Boltzmann machine (RMB), and the like. The neural network device 730 may be, for example, a hardware accelerator itself dedicated to the neural network and/or a device including the hardware accelerator.

The neural network device 730 may correspond to any of the IMC macros described above (e.g., the IMC macro 200 in FIG. 2 and/or the IMC macro 300 in FIG. 3), for example. The neural network device 730 may control SRAM bit cell circuits of the IMC circuit to share and/or process the same input data, and may select at least some of operation results output from the SRAM bit cell circuits.

The term "information signal" used herein may include one of various types of recognition signals, such as, for example, a speech recognition signal, an object recognition signal, an image recognition signal, a biometric information recognition signal, and the like. For example, the neural network device 730 may receive frame data included in a video stream as input data and may generate, from the frame data, a recognition signal for an object included in an image represented by the frame data. The neural network device 730 may receive various types of input data depending on the type or functionality of an electronic device on which the electronic system 700 is mounted, and may generate a recognition signal based on the input data.

The memory 740, which is a storage location for storing data, may store an operating system (OS), various programs, and various data. In an example embodiment, the memory 740 may store intermediate results generated during a process of performing a computation operation of the neural network device 730.

The memory 740 may include at least one of a volatile memory or a non-volatile memory (but not a signal per se). The non-volatile memory may include, as non-limiting examples, read-only memory (ROM), programmable ROM (PROM), erasable PROM (EPROM), electrically EPROM (EEPROM), flash memory, and the like. The volatile memory may include, as non-limiting examples, DRAM, SRAM, synchronous DRAM (SDRAM), phase-change memory (PCM) RAM (PRAM), magnetic RAM (MRAM), resistive RAM (RRAM), and/or ferroelectric RAM (FRAM). Depending on examples, the memory 740 may include at least one of a hard disk drive (HDD), a solid-state drive (SSD), a compact flash (CF) card, a secure digital (SD) card, a micro-SD card, a mini-SD card, an extreme digital (Xd) picture card, or a memory stick.

The sensor module 750 may collect information around an electronic device on which the electronic system 700 is mounted. The sensor module 750 may sense or receive a signal (e.g., an image signal, a speech signal, a magnetic signal, a biosignal, a touch signal, and the like) from the outside of the electronic system 700 and convert the sensed or received signal into data. The sensor module 750 may include at least one of various sensing devices, such as, for example, a microphone, an imaging device, an image sensor, a light detection and ranging (LIDAR) sensor, an ultrasonic sensor, an infrared sensor, a biosensor, and a touch sensor.

The sensor module 750 may provide the data obtained through the conversion as input data to the neural network device 730. For example, the sensor module 750 may include an image sensor, and may generate a video stream by capturing an image of an external environment of the electronic system 700 and provide successive data frames of the video stream as the input data to the neural network device 730. However, the sensor module 750 may not be limited thereto and may provide various types of data to the neural network device 730.

The transmit/receive module 760 may include various types of wired or wireless interfaces configured to communicate with an external device. For example, the transmit/receive module 760 may include a communication interface accessible to a local area network (LAN), a wireless LAN (WLAN) such as wireless fidelity (Wi-Fi), a wireless personal area network (WPAN) such as Bluetooth, a wireless universal serial bus (USB), ZigBee, near-field communication (NFC), radio-frequency identification (RFID), power line communication (PLC), a mobile cellular network such as third generation (3G), fourth generation (4G), and long term evolution (LTE), and the like.

The examples described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For the purpose of simplicity, the description of a processing device is used as singular; however, one skilled in the art will be appreciated that a processing device may include multiple processing elements and multiple types of processing elements. For example, a processing device may include multiple processors or a processor and a controller. In addition, different processing configurations are possible, such as, parallel processors.

The computing apparatuses, the vehicles, the electronic devices, the processors, the memories, the sensors, the vehicle/operation function hardware, the ADAS systems, the displays, the information output system and hardware, the storage devices, and other apparatuses, devices, units, modules, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-Res, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims . The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims.

## Claims

1. An in-memory computing, IMC, macro having an operating mode that can alternate between a first mode and a second mode, comprising:

an input control circuit configured to be capable of generating a signal in which a predefined pattern is applied to an input signal and of transmitting a previous operation result that is fed back, and which is performed depends on which mode the operating mode is in;
a crossbar array comprising memory cells comprising an additional row that processes and stores the fed-back previous operation result, and columns comprising an adder tree corresponding to the memory cells; and

a post arithmetic circuit configured to be capable of performing a first operation corresponding to a spiking neural network, SNN, and a second operation corresponding to an artificial neural network, ANN, wherein which of the first and second operations is performed depends on which mode the operating mode is in.

2. The IMC macro of claim 1, wherein the memory cells comprise rows that store weights corresponding to the input signal, and

wherein the adder tree is configured to add a first operation result between the input signal and the weights and a second operation result between the predefined pattern and the previous operation result.

3. The IMC macro of claim 1 or 2, wherein the input signal comprises: a spiking signal for the SNN or a feature map for the NN.

4. The IMC macro of one of claims 1 to 3, being configured to:
set the operating mode to the first mode for the SNN or the second mode for the NN, depending on a command transmitted from a host.

5. The IMC macro of one of claims 1 to 4, wherein the first mode is for the SNN and the second mode is for the NN, and wherein the input control circuit is further configured to:

based on the operating mode being in the first mode, set the predefined pattern to 1; and based on the operating mode being in the second mode, set the predefined pattern to a pattern, the pattern corresponding to a number of bits of the input signal.

6. The IMC macro of one of claims 1 to 5, wherein the previous operation result comprises a previous membrane-potential value of the SNN, and wherein the input control circuit comprises an additional input port configured to, depending on which mode the operating mode is in, transmit a processed value of the previous membrane-potential value or transmit a bias value for each of the plurality of columns to the additional row of each of the memory cells.

7. The IMC macro of claim 6, wherein the first mode is for the SNN, wherein the processed value of the previous membrane-potential value is an arithmetic-negation of the previous membrane-potential value fed back from the post arithmetic circuit, and wherein the additional input port is configured to:

based on the operating mode being in the first mode, transmit the processed value to the additional row of each of the memory cells, or

wherein the second mode is for the NN, and wherein the additional input port is configured to: based on the operating mode being in the second mode, transmit the bias value for each of the columns to the additional row of each of the memory cells.

8. The IMC macro of claim 7, wherein the additional row is configured to:

based on the operating mode being in the first mode, store the processed previous membrane-potential value; and

based on the operating mode being in the second mode, store the bias value for each of the plurality of columns.

9. The IMC macro of claim 8, wherein the crossbar array is configured to:
store a result of adding, by the adder tree, (i) a first multiply operation result obtained by adding individual products between weights stored in the memory cells and the input signal and (ii) a second multiply operation result obtained by multiplying the predefined pattern and a value stored in the additional row.

10. The IMC macro of one of claims 1 to 9, wherein the post arithmetic circuit comprises:

a first shifter configured to adjust an operation result of the adder tree by a right shift operation, based on the operating mode being a first mode;
a second shifter configured to adjust a value stored in an accumulator by a left shift operation, based on the operating mode being a second mode; and
the accumulator.

11. The IMC macro of claim 10, wherein the post arithmetic circuit is configured to, based on the operating mode being in the first mode:

by the first shifter, perform the right shift operation on an operation result between a spiking signal and a weight, which is added by the adder tree;
by the second shifter, pass-through a membrane-potential value stored in the additional row; and
store, in the accumulator, a result of the right shift operation and the passed-through membrane-potential value, or
wherein the post arithmetic circuit is configured to, based on the operating mode being the second mode:

by the first shifter, pass-through, into the accumulator, a result of adding (i) a first multiply operation between a weight stored in the memory cells and the input signal and (ii) a second multiply operation between a bias value for each of the columns stored in the additional row and a value of the predefined pattern;
by the second shifter, perform the left shift operation on an operation result of the accumulator corresponding to the input signal that is applied bit-serially; and
by the accumulator, accumulate a result of the left shift operation to generate a multi-bit.

12. The IMC macro of one of claims 1 to 11, wherein the adder tree is configured to, at each operation, for each of the plurality of columns:

simultaneously perform (i) a first multiply operation between the input signal and weights stored in the memory cells and (ii) a second multiply operation between the weights and the previous operation result, or
wherein the IMC macro is integrated in at least one device among a mobile device, a mobile computing device, a mobile phone, a smartphone, a personal digital assistant, PDA, a fixed location terminal, a tablet computer, a computer, a wearable device, a laptop computer, a server, a music player, a video player, an entertainment unit, a navigation device, a communication device, a global positioning system, GPS, device, a television, TV, a tuner, a satellite radio, a song player, a digital video player, a digital video disc, DVD, player, a vehicle, a component of the vehicle, an avionics system, a drone, a multicopter, and a medical device.

13. A method of operating an in-memory computing, IMC, macro having an operating mode that can alternate between a first mode and a second mode, the method comprising:

depending on which mode the operating mode is in, transmitting a result of applying a predefined pattern to an input signal or a previous membrane-potential value that is fed back;
storing weights corresponding to the input signal in rows of memory cells, and processing and storing the fed-back previous membrane-potential value in an additional row of the memory cells;
adding, by an adder tree, (i) a first operation result between the input signal and the weights and (ii) a second operation result between the predefined pattern and the fed-back previous membrane-potential value; and
selectively performing a first operation corresponding to a spiking neural network, SNN, or a second operation corresponding to an artificial neural network, ANN, wherein which of the operations is performed depends on which mode the operating mode is in.

14. The method of claim 13, wherein the transmitting comprises:

depending on which mode the operating mode is in, transmitting a processed value of the previous membrane-potential value or a bias value for each of the plurality of columns to the additional row of each of the memory cells, wherein the first mode is for the SNN and the second mode is for the NN, and wherein the transmitting to the additional row comprises:

based on the operating mode being in the first mode, updating the additional row by transmitting, to the additional row of each of the memory cells, the processed value, wherein the processed value is obtained by arithmetic-negation of the previous membrane-potential value; and
based on the operating mode being in the second mode, updating the additional row by transmitting the bias value for each of the plurality of columns of the memory cells to the additional row of each of the memory cells.

15. The method of claim 13 or 14, wherein the first mode is for the SNN, and wherein the selectively performing comprises:

based on the operating mode being in the first mode,
by a first shifter, performing a right shift operation on an operation result between a spiking signal and the weights, which is added by the adder tree;
by a second shifter, passing-through a membrane-potential value stored in the additional row; and
storing a result of the right shift operation and the passed-through membrane-potential value in an accumulator, and/or
wherein the second mode is for the NN, and wherein the selectively performing comprises:
based on the operating mode being in the second mode:

by a first shifter, passing-through, into an accumulator, a result of adding (i) a first multiply operation between the weights stored in the memory cells and the input signal and (ii) a second multiply operation between a bias value for each of the plurality of columns stored in the additional row and a value of the predefined pattern;

by a second shifter, performing a left shift operation on an operation result of the accumulator corresponding to the input signal that is applied bit-serially; and

by the accumulator, accumulating a result of the left shift operation to generate a multi-bit.

FIG. 1A

130

Synchronous readouts,
feature aggregate over time

SNN 140

ANN 150

Class,
bounding
boxes

Accumulator

Asynchronous, sparse, no preprocessing

FIG. 1B

FIG. 1C

EP 4 579 529 A1

200

| 210 | 230 | 250 |
|---|---|---|
| **Input control circuit** | **Crossbar array** | **Post arithmetic circuit** |

Input control circuit

Additional input port

215

Crossbar array

Memory cells | Adder tree

231 | 235

Post arithmetic circuit

First shifter | Second shifter | Accumulator

251 | 253 | 255

FIG. 2

FIG. 3

EP 4 579 529 A1

SNN

400

Spiking signal
401

320

Column m

Additional row, U(t) — 310

$-U(t)+RI_{in}(t)$

251 — Shift

Shift — 253

305

$\frac{\Delta t}{\tau}(-U(t)+RI_{in}(t))$

U(t)

255

Accum

$U(t+\Delta t)=U(t)+\frac{\Delta t}{\tau}(-U(t)+RI_{in}(t))$

FIG. 4A

ANN

410

Input feature map 403

320

$X(b)*W_m+B_m(b)$

Column m

Additional row, $B_m$

310

251 Shift

Shift 253

255 Accum

$X*W_m+B_m$

to Postsynaptic neuron

FIG. 4B

FIG. 5

```
                    ┌─────────────┐
                    │    Start    │
                    └──────┬──────┘
                           │
                           ▼
┌─────────────────────────────────────────────────────┐
│ Transmit result of applying predefined pattern to    │
│ input signal or previous membrane potential value    │ ～ 610
│ that is fed back, depending on operating mode         │
└─────────────────────────┬───────────────────────────┘
                           │
                           ▼
┌─────────────────────────────────────────────────────┐
│ Store weights corresponding to input signal in rows  │
│ of memory cells, and process and store previous      │ ～ 620
│ membrane potential value in at least one additional  │
│ row of memory cells                                  │
└─────────────────────────┬───────────────────────────┘
                           │
                           ▼
┌─────────────────────────────────────────────────────┐
│ Add, by adder tree, first operation result between   │
│ input signal and weights and second operation result │ ～ 630
│ between predefined pattern and previous membrane     │
│ potential value                                      │
└─────────────────────────┬───────────────────────────┘
                           │
                           ▼
┌─────────────────────────────────────────────────────┐
│ Selectively perform first operation corresponding to │
│ SNN or second operation corresponding to ANN,        │ ～ 640
│ depending on operating mode                          │
└─────────────────────────┬───────────────────────────┘
                           │
                           ▼
                    ┌─────────────┐
                    │     End     │
                    └─────────────┘
```

FIG. 6

700

| 710 | 720 | 730 |
|---|---|---|
| Processor | RAM | Neural network device |

| 740 | 750 | 760 |
|---|---|---|
| Memory | Sensor module | Transmit/ receive module |

FIG. 7

Europäisches
Patentamt

European
Patent Office

Office européen
des brevets

## EUROPEAN SEARCH REPORT

**Application Number**

EP 24 20 8687

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINDONG LI ET AL: "FireFly: A High-Throughput Hardware Accelerator for Spiking Neural Networks with Efficient DSP and Memory Optimization", ARXIV.ORG, CORNELL UNIVERSITY LIBRARY, 201 OLIN LIBRARY CORNELL UNIVERSITY ITHACA, NY 14853, 14 April 2023 (2023-04-14), XP091484082, * abstract * * chapters I-VI; page 1 - page 13; figures 1-4 * | 1-15 | INV. G06N3/049 G06N3/063 |
| X | AGRAWAL AMOGH ET AL: "IMPULSE: A 65-nm Digital Compute-in-Memory Macro With Fused Weights and Membrane Potential for Spike-Based Sequential Learning Tasks", IEEE SOLID-STATE CIRCUITS LETTERS, IEEE, vol. 4, 28 June 2021 (2021-06-28), pages 137-140, XP011867125, DOI: 10.1109/LSSC.2021.3092727 [retrieved on 2021-07-16] * abstract * * chapters I-IV; page 137 - page 140; figures 1-10 * | 1-15 | TECHNICAL FIELDS SEARCHED (IPC) G06N |

The present search report has been drawn up for all claims

| Place of search | Date of completion of the search | Examiner |
|---|---|---|
| The Hague | 28 February 2025 | Hasnas, Sergiu |

EPO FORM 1503 03.82 (P04C01)